(19) **Europäisches Patentamt**

**European Patent Office**

**Office européen des brevets**

(11) **EP 1 396 949 A2**

(12) **EUROPEAN PATENT APPLICATION**

(43) Date of publication:
**10.03.2004 Bulletin 2004/11**

(51) Int Cl.⁷: **H04B 10/148**

(21) Application number: **03010909.4**

(22) Date of filing: **15.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **McAlexander, William Ian**<br>**Redwood City, CA 94061 (US)** |
| (30) Priority: **05.09.2002 US 235701** | (74) Representative: **Liesegang, Roland, Dr.-Ing. et al**<br>**FORRESTER & BOEHMERT**<br>**Pettenkoferstrasse 20-22**<br>**80336 München (DE)** |
| (71) Applicant: **Agilent Technologies Inc**<br>**Palo Alto, CA 94306-2024 (US)** | |

(54) **Neural network filter for adaptive noise subtraction in optical heterodyne signals**

(57)    An artificial neural network (306) is utilized as a filter in an optical heterodyne balanced receiver system (200). Such an artificial neural network can be adapted or trained to correct for non-ideal behavior and imperfections in the optical heterodyne system.

*FIG. 1*

**Description**

Technical Field of the Invention

Embodiments in accordance with the invention relate to the processing of optical heterodyne signals and, in particular, to a method and system for adaptive noise subtraction in optical heterodyne signals.

Description of Related Art

Optical heterodyne signals refer to the mixing of optical signals through some non-linearity. Such optical heterodyne signals are employed in a number of applications including coherent optical communication systems, optical transmission systems, and optical measurement systems. Typically, two or more optical signals are overlapped using a beam splitter or an optical coupler, and are subsequently mixed using a non-linearity such as photodiode detection. See, e.g., D. Baney, B. Szafraniec, A. Motamedi, "Coherent Optical Spectrum Analyzer," IEEE Photonics Technology Letters, Vol. 14, No. 3, March 2002. The photocurrent associated with each photodiode in such a system has two components: a direct signal associated with the optical power for each input signal, and a heterodyne signal resulting from mixtures of products of different input signals. In theory, when optical detection between any two receivers is balanced, subtracting the two photocurrents should cancel the direct signals, leaving only the combined heterodyne signals. This is a result of the phase relation imposed by the optical coupler onto the various signals. In reality, subtraction of the two photocurrents does not completely isolate the heterodyne signals due to non-ideal behavior and imperfections in the system.

Signal processing filters such as FIR filters have been utilized to compensate for the non-ideal behavior and imperfections, but the lack of feedback elements, and sensitivity to polarization and temperature are drawbacks of such filter systems.

Accordingly, it would be desirable to provide a filter for an optical heterodyne system with balanced detection that can correct for the non-ideal behavior and imperfections in the system. In particular, it would be desirable to provide an adaptive filter that can accommodate multiple feedback parameters as well as polarization and temperature changes in the optical signal in a single filter structure.

**SUMMARY OF THE INVENTION**

Typical embodiments in accordance with the invention are directed to the use of an artificial neural network as a filter in an optical heterodyne balanced receiver system. Such an artificial neural network can be adapted or trained to correct for non-ideal behavior and imperfections in the optical heterodyne system. Once trained, the artificial neural network can be used to properly isolate the heterodyne components in the optical signal. A single artificial neural network can accommodate multiple parameters of the optical signal. Additional parameters may be added by adjusting the artificial neural network as needed.

As such, the invention overcomes the disadvantages and drawbacks of prior techniques by providing an adaptive filter that can accommodate multiple parameters of an optical heterodyne system in a single filter structure, and wherein additional parameters of interest may be added as needed.

**BRIEF DESCRIPTION OF THE DRAWINGS**

The disclosed invention will be described with reference to the accompanying drawings, which show important sample embodiments in accordance with the invention and which are incorporated in the specification hereof by reference, wherein:

FIG. 1 illustrates an optical heterodyne system according to embodiments in accordance with the invention;
FIG. 2 illustrates a data processing unit according to embodiments in accordance with the invention;
FIG. 3 illustrates an artificial neural network according to embodiments in accordance with the invention;
FIG. 4 illustrates an exemplary neural network configuration according to embodiments in accordance with the invention;
FIG. 5 illustrates another exemplary neural network configuration according to embodiments in accordance with the invention;
FIG. 6 illustrates an exemplary node in an artificial neural network according to embodiments in accordance with the invention;
FIG. 7 illustrates a method of filtering an optical signal according to embodiments in accordance with the invention; and
FIGS. 8A-8D show optical heterodyne measurements taken using the system and method of the invention.

**DETAILED DESCRIPTION OF EXEMPLARY EMBODIMENTS IN ACCORDANCE WITH THE INVENTION**

Embodiments in accordance with the invention provide a method and system for using one or more artificial neural networks as filters in an optical heterodyne system with balanced receivers. The artificial neural networks can be trained or adapted to correct for any non-ideal behavior and imperfections that may be present in the optical heterodyne system. To train an artificial neural network, a single input signal is applied to the optical heterodyne system. A non-zero difference between any two outputs resulting from the single input signal can be directly attributed to the non-ideal behavior and imperfections in the system. This output is used as a feedback signal to train the artificial neural network until the error has been reduced or eliminated. The trained artificial neural network may thereafter be used to balance the receivers and isolate the heterodyne signals when at least two input signals are applied.

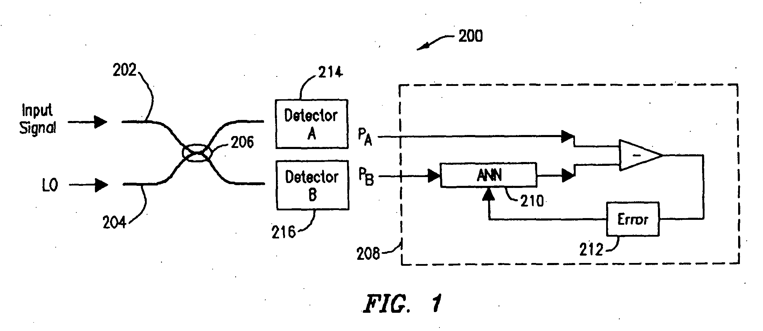

Referring now to FIG. 1, an optical heterodyne system 200 according to some embodiments in accordance with the invention is shown. System 200 of FIG. 1 includes optical fibers 202, 204 that are optically linked by optical coupler 206. An optical signal, typically an unknown signal, is provided as input to one of optical fibers 202, 204. A reference signal called a local oscillator (LO) is usually provided as input to the other one of optical fibers 202, 204. Note that it is not necessary to the invention to specifically have an unknown signal and an LO signal. Any optical signal may be used as input to either of the optical fibers 202, 204. Detectors A and B (214, 216) are configured to detect the optical signals that emerge from the output of optical fibers 202, 204. Detectors A and B (214, 216) generate photocurrents $P_A$ and $P_B$ that are proportional to the square of the optical signals from optical fibers 202, 204. Data processing unit 208 provides processing of photocurrents $P_A$ and $P_B$.

Data processing unit 208 has been shown in FIG. 1 in terms of its functionality for illustrative purposes. As can be seen, data processing unit 208 has been configured to receive photocurrents $P_A$ and $P_B$ from detectors A and B (214, 216). Data processing unit 208 has also been configured to implement filter 210 for one of the photocurrents, namely, $P_B$ in this embodiment. The function of filter 210 is to correct for the non-ideal behavior and imperfections in optical heterodyne system 200. Such non-ideal behavior and imperfections may be present, for example, in optical coupler 206 and detectors A and B (214, 216). In accordance with embodiments in accordance with the invention, filter 210 is an artificial neural network (ANN).

It will be apparent to those skilled in the art that the above scheme of balanced detection can be implemented with a separate artificial neural network for each detector. In addition, some embodiments in accordance with the invention can have more than two detectors and/or more than two inputs. Where more than two detectors are used, any two detector outputs can be subtracted from each other to provide isolation of the heterodyne components and suppression of the direct components. In these embodiments, one or more separate artificial neural networks may be used to filter and balance each pair of detector output photocurrents.

In order for artificial neural network filter 210 to function properly, it must first be trained. Training involves removing one of the input signals, either the unknown signal or the LO signal, from optical heterodyne system 200. For training purposes, it is not important which input signal is removed, although it is typical that the LO signal is removed. Difference or error 212 is then determined by subtracting the output of artificial neural network filter 210 from unfiltered photocurrent $P_A$. Error 212 is subsequently fed back to artificial neural network filter 210. Because only a single input signal is applied, no heterodyne component should be present in photocurrents $P_A$ and $P_B$. As a result, error 212 should be substantially zero for a balanced receiver system.

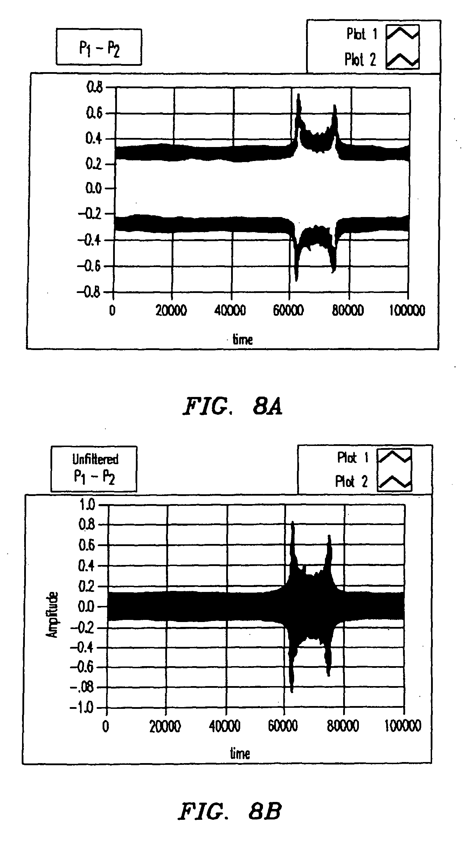

Training can also be done with both signals, provided the data that is used comes from a portion of the two signals where the heterodyne component is known to be substantially zero. Since the heterodyne component is substantially zero, error 212 should also be substantially zero. An example of this approach is described later with respect to FIGS. 8A-8D.

A substantially non-zero error indicates that the effects of the non-ideal behavior and imperfections are not being fully compensated for by artificial neural network filter 210. Thus, artificial neural network 210 will need to be adjusted (described later herein) until error 212 is substantially zero. A substantially zero error 212 indicates that artificial neural network filter 210 has been properly trained.

Once artificial neural network filter 210 is trained or calibrated, the optical heterodyne system may be operated with two or more input signals again. Note that changing the input signals or other aspects of the operating environment can often change the effects of the non-ideal behavior and imperfections in optical heterodyne system 200. As a result, artificial neural network filter 210 may sometimes need to be retrained after such changes.

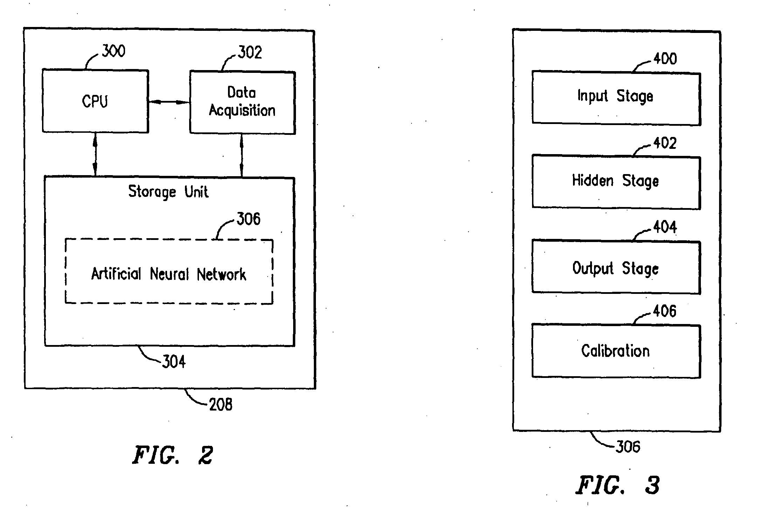

FIG. 2 illustrates a functional block diagram of data processing unit 208. Data processing unit 208 has a number of components including central processing unit 300, data acquisition unit 302, and also data unit 304. Central processing unit 300 is typical central processing unit and may include one or more microprocessors, ASICs, DSPs, and the like, that are capable of processing large amounts of data. Data acquisition unit 302 is also a typical data acquisition unit that can convert the photocurrents from detectors A and B (214, 216) into digital data. Such data acquisition unit 302 may include the PCI-6110E data acquisition card from National Instruments. Data storage unit 304 may include long-term data storage devices such as magnetic memory, optical memory, and the like, as well as short-term data storage devices such as random access memory and the like.

Stored in data storage unit 304 are software programs and data that are used by central processing unit 300 to operate optical heterodyne system 200, including artificial neural network 306. In some embodiments, artificial neural network 306 is stored in the form of computer readable instructions that can be executed by central processing unit 300. Such computer readable instructions may be derived or compiled from a language such as C++, Fortran, Labview, or other computer programming languages.

Artificial neural network 306 receives digital data representing one of the photocurrents (e.g., photocurrent $P_B$) from data acquisition unit 302. The data is then corrected to compensate for the effects of the non-ideal behavior and imperfections in optical heterodyne system 200. The corrections are such that when the output of artificial neural network 306 is subtracted from the other photocurrent (e.g., photocurrent $P_A$), essentially only the heterodyne signals remain as required by balanced receiver architecture. The corrected or filtered version of the received data is then provided to central processing unit 300. Central processing unit 300 performs additional processing on the data, including subtracting the data from the other photocurrent (e.g., photocurrent $P_A$).

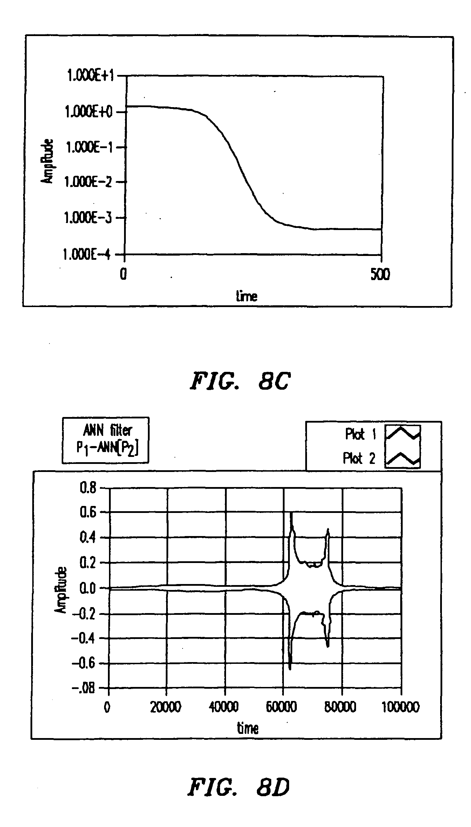

When training or calibrating artificial neural network 306, substantially the same correcting or filtering functions are performed. However, the data provided to artificial neural network 306 is usually based on a single input signal (although it is possible for two input signals to be used, as will be explained with respect to FIG. 8C). The result of the subtraction performed by central processing unit 300 is then provided as feedback to the artificial neural network 306. Artificial neural network 306 uses the feedback signal to adjust its correcting or filtering functions. Training or calibration may be considered completed when certain predefined criteria are satisfied. Such criteria may be based on, for example, the size of the subtraction result (i.e., error 212), and the like.

Turning now to FIG. 3, exemplary artificial neural network 306 is shown. Artificial neural network 306 has a number of modules including input stage 400, intermediate or hidden stage 402, and output stage 404. Input stage 400 receives the data that is provided to artificial neural network 306. This data is then processed in sequence from input stage 400 through hidden stage 402 and to output stage 404. Output stage 404 provides the output of artificial neural network 306. Various stages 400, 402, and 404 together provide the correcting or filtering function of artificial neural network 306. Calibration module 406 facilitates the training or calibration of artificial neural network 306. Calibration module 406 performs a number of functions including controlling certain training parameters. Such parameters may include, for example, the number of data samples used, the number of iterations run, and other similar parameters.

Although the functional modules of artificial neural network 306 are shown as being separated in FIG. 3, the invention is not to be limited thereto. Those skilled in the art will understand that several modules may be combined into a single module, or one module may be subdivided to several sub-modules. Moreover, functional modules may be added to or removed from the artificial neural network 306 as needed depending on the particular application.

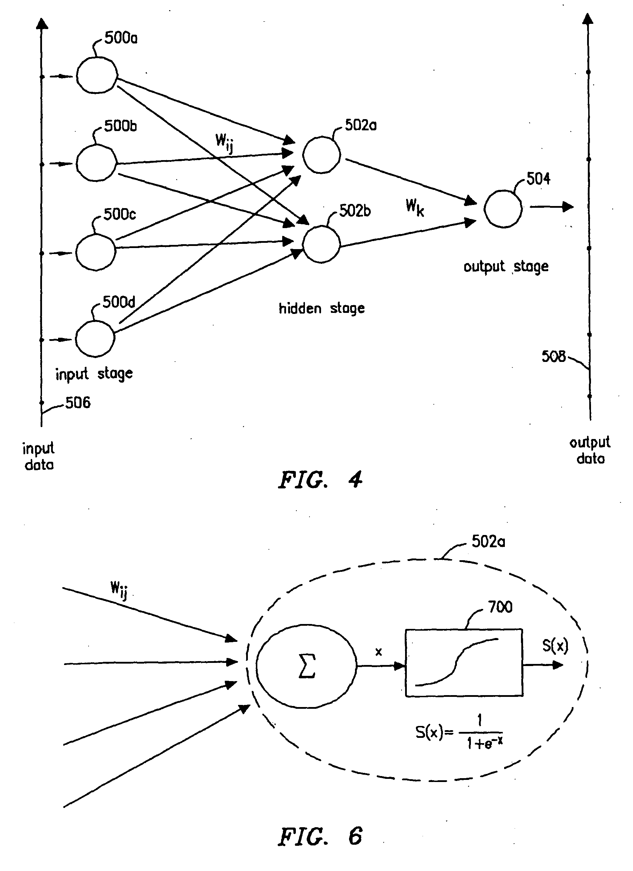

FIG. 4 illustrates the relationship between input stage 400, hidden stage 402, and output stage 404 of artificial neural network 306 in more detail. As can be seen, each of the input, hidden, and output stages have one or more nodes, respectively. In the example shown, there are four input stage nodes 500a-d, two hidden stage nodes 502a-b, and one output stage node 504. The nodes are arranged so that each node from the previous stage is connected to each node in the next stage. For example, each node 500a-d from the input stage is connected to each node 502a-b in the hidden stage. Likewise, each node 502a-b from the hidden stage is connected to each node 504 in the output stage.

Nodes 500a-d of the input stage each have a weight coefficient $W_{ij}$ associated therewith. Similarly, nodes 502a-b of the hidden stage each have a weight coefficient $W_k$ associated therewith. The weight coefficients $W_{ij}$ and $W_k$ determine the functionality of the artificial neural network 306 and affect how data is processed thereby. Note in FIG. 4 that each line from each input stage node 500a-d represents a separate and distinct weight coefficient $W_{ij}$. Similarly, each line from each hidden stage node 502a-b represents a separate and distinct weight coefficient $W_k$. These weight coefficients $W_{ij}$ and $W_k$ are usually different, but it is possible for two or more to be the same. The weight coefficients $W_{ij}$ and $W_k$ are randomly selected initially, then defined during the training or calibration phase of artificial neural network 306 (as will be explained later below).

During regular operation, data from data stream 506 is provided to artificial neural network 306 through input stage nodes 500a-d. The data in data stream 506 represents one of the photocurrents (e.g., photocurrent $P_B$). Nodes 500a-d of the input stage are configured to apply the input node weight coefficients $W_{ij}$ to the data. The weighted data from each input stage node 500a-d is then provided to each hidden stage node 502a-b.

Hidden stage nodes 502a-b, in turn, are configured to apply the hidden node weight coefficients $W_k$ to the data received from the input stage nodes 500a-d. The weighted data from each hidden stage node 502a-b is then provided to output stage node 504.

The outputs of output stage node 504 produce a corrected or filtered data stream 508. Filtered data stream 508 contains data that has now been corrected to compensate for the effects of the non-ideal behavior and imperfections in optical heterodyne system 200 so that the receiver is balanced. Thus, when filtered data stream 508 is subtracted from data representing the other photocurrent (e.g., photocurrent $P_A$), essentially only the heterodyne signal remains. Note there is no weight coefficient associated with output stage node 504; however, in some embodiments, a predetermined gain k may be applied to the data at output stage node 504.

In some embodiments, input data stream 506 may be incremented one data sample at a time through artificial neural network 306. Thus, the data sample being processed by fourth input stage node 500d during the current increment will be processed by third input stage node 500c in the next increment, and so on through input data stream 506. In other embodiments, however, a different size increment (e.g., two, five, 10 data samples, etc.) may be used for each increment as appropriate for the application. Note that the flow direction of data stream 506 (e.g., from fourth node 500d to first node 500a) is not critical to the practice of the invention and may be chosen as needed.

Training or calibration of the artificial neural network is facilitated by calibration module 406 (as mentioned earlier in FIG. 3). In particular, calibration module 406 is configured to define the weight coefficients $W_{ij}$ and $W_k$ for the input stage nodes and the hidden stage nodes, respectively. The weight coefficients $W_{ij}$ and $W_k$ can be defined from the following equation:

$$W_{new} = W_{old} + E\mu \ \frac{\partial \, Output}{\partial \, W_{old}} \qquad (1)$$

where $W_{new}$ is the new weight coefficient, $W_{old}$ is the old (i.e., current) weight coefficient, $E$ is the error signal, and $\partial \, Output/\partial \, W_{old}$ is the derivative of the artificial neural network output with respect to the old weight coefficient. The $\mu$ term in Equation (1) represents momentum or convergence speed, a number that is empirically found and indicates how fast the artificial neural network will converge. It should be noted that Equation (1) is but one exemplary method of determining the weight coefficients, and that other weighting methods may certainly be used without departing from the scope of the invention.

The configuration of the artificial neural network as shown in FIG. 4 is generally referred to as a feed-forward error back-propagation configuration. Other artificial neural network configurations may also be used where appropriate without departing from the scope of the invention.

Furthermore, the embodiment in FIG. 4 shows every input stage node 500a-d connected to every hidden stage node 502a-b, and every hidden stage node 502a-b connected to every output stage node 504. In some embodiments, however, only some input stage nodes 500a-d are connected to the hidden stage nodes 502a-b, and only some hidden stage nodes 502a-b are connected to output stage node 504. The specific connectivity of the nodes may be varied as needed for a particular application.

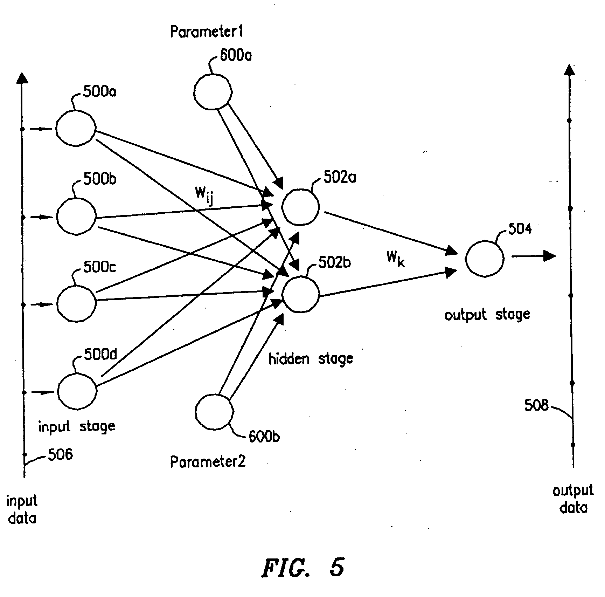

Moreover, although a total of seven nodes and 10 weights are shown in FIG. 4, those skilled in the art will understand that a different number of input stage nodes, hidden stage nodes, or output stage nodes may certainly be used. Indeed, one of the advantages of using an artificial neural network in the manner described is that the number of input stage nodes may be adjusted (decreased/increased) to track the various parameters of an optical signal as needed. Referring now to FIG. 5, additional input stage nodes 600a-b have been added to artificial neural network 306. Input stage nodes 600a-b may be added, for example, to track the dependency of the optical signal on temperature (parameter 1) and polarization (parameter 2). Thus, by using an artificial neural network, a large number of parameters of interest may be tracked using a single filter structure. Furthermore, the number of parameters that can be tracked may be modified as needed to suit the specific application. In some embodiments, the data representing the additional parameters may need to be normalized to fit within a certain scale (e.g., $0°C=1$, $100°C=5$) as needed by the neural network architecture.

Data is evaluated in the artificial neural network from the input stage nodes to the output stage node. For the input stage nodes, the value of each node may be a normalized version of the input data. For example, the input data may be multiplied by a predefined normalization factor (e.g., 0.3, 0.7, 1.0, 1.4, 1.8, etc.) to fit within a certain scale, as needed by the neural network architecture. In some embodiments, however, the value at each node can simply be the value of the input data.

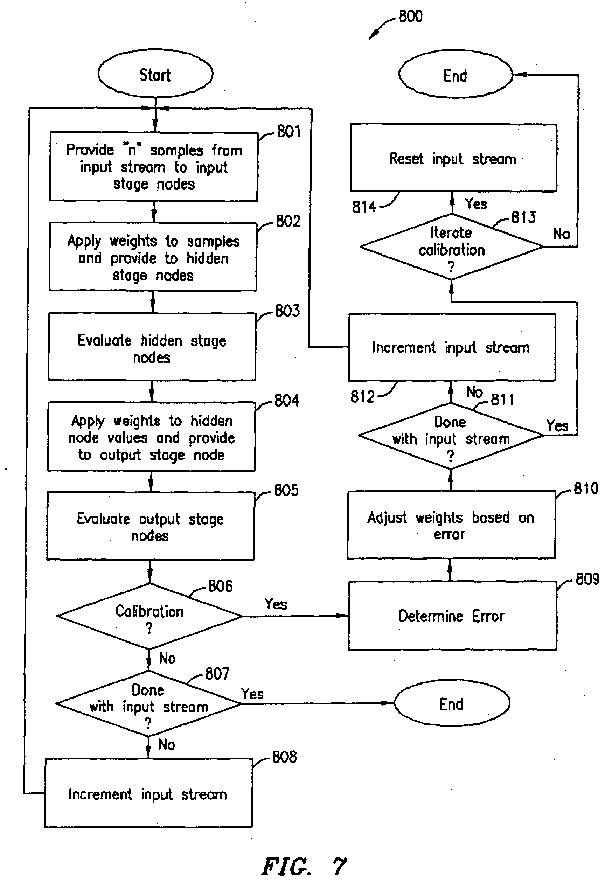

For the hidden stage nodes and the output stage node, the value at each node is a function of the weighted values of all nodes in the previous stages. FIG. 6 illustrates the process of evaluating the hidden stage nodes in more detail.

Referring now to FIG. 6, the value of a hidden stage node (e.g., first hidden stage node 502a) is the sum $x$ of the weighted values of the nodes from the previous stage, namely, the input stage. Thus, the sum of the weighted input stage node values determine, in part, the value of the hidden stage nodes. The sum x is then processed through transfer function 700. In some embodiments, transfer function 700 is a non-linear transfer function such as a sigmoid function, $S(x)=1/1+e^{-x}$. The use of such non-linear functions for filtering signals in artificial neural networks has advantages over linear transfer functions. For example, such non-linear transfer functions have been found to be more effective in compensating for the complex and sometimes non-linear correlations between the parameters (e.g., wavelength, polarization, temperature) of an optical signal. However, linear transfer functions may also be used as needed without departing from the scope of the invention.

The evaluation process shown in FIG. 6 can also be applied to the output stage node. Specifically, the value of the output stage node is the sum of the weighted values of the nodes in the previous stage, namely, the hidden stage. Thus, the weighted hidden stage node values (and hence, the input stage node values) determine the value of the output stage node. The value of the output stage node may thereafter be multiplied by the constant gain k as needed in some embodiments.

FIG. 7 illustrates method 800 of filtering optical heterodyne signals using an artificial neural network according to embodiments in accordance with the invention. In step 801, a number of data samples (e.g., four in this embodiment) are provided to the input stage nodes. The data samples are provided from an input stream representing one of the photocurrents (e.g., photocurrents $P_B$). In step 802, the input stage node weights are applied to the data samples, and the weighted data samples are provided to the hidden stage nodes. In step 803, the value at each hidden stage node is evaluated (e.g., by summing the weighted data), including application of a transfer function to the values. In step 804, the hidden stage node weights are applied to the hidden stage node values, and the weighted values are then provided to the output stage node. In step 805, the value of the output stage node is evaluated (e. g., by summing the weighted hidden node values), including application of the transfer function to the value.

In step 806, a determination is made as to whether the artificial neural network is in a training or calibration mode. In some embodiments, the artificial neural network may be manually placed into the calibration mode by a user (e.g., via calibration module 406). In other embodiments, calibration is triggered by the occurrence of some predetermined event or criteria (e.g., a change of input signals). In the latter case, calibration may then be performed using one or more pre-programmed training parameters specified in calibration module 406.

If the answer to step 806 is no (i.e., the artificial neural network is not in calibration), then in step 807, another determination is made as to whether the input stream is completed. If the answer to this step is no, then in step 808, the input stream is incremented by a predetermined increment (e.g., one data sample). The method subsequently returns to step 801 to load the next set of data samples into the input stage nodes. If the answer to step 807 is yes, then the method is ended.

If the answer to step 806 is yes (i.e., the artificial neural network is in calibration), then in step 809, an error is determined between the output of the artificial neural network and the other photocurrent (e.g., photocurrent $P_A$). In step 810, the weights of the artificial neural network are adjusted based on the determined error. The weights may be adjusted in accordance with Equation (1) above (e.g., by calibration module 406). In step 811, a determination is again made as to whether the input stream is completed. If the answer to step 811 is no, then in step 812, the input stream is incremented by one increment. The method then returns to step 801 to load the next set of data samples into the input stage nodes.

If the answer to step 811 is yes, then in step 813, a determination is made as to whether calibration should be rerun using the same input stream. If the answer to step 813 is no, then the method is ended. If the answer to step 813 is yes, then in step 814, the input stream is reset. The method then returns to step 801 to load the next set of data samples (which will now be the first set of data samples in the input stream). Such an arrangement allows multiple iterations of calibration to be run using the same set of data. With each iteration, the correcting or filtering function of the artificial neural network is improved over the previous iteration. Thus, by running a sufficiently large number of iterations, the artificial neural network may be trained to provide the desired level of correcting or filtering.

An example of an optical heterodyne signal measurement taken with the system and method of the invention is shown in FIGS. 8A-8D. Referring to FIG. 8A, the photocurrents for two signals produced by an optical coupler are labeled as plot P1 (black signal) and plot P2 (white signal), respectively. As can be seen, plot P2 has a smaller amplitude than plot P1, indicating that the detectors and/or the outputs of the optical coupler are not balanced. Both signals have a direct signal as indicated by the flat part of plots, and a heterodyne signal as indicated by the double-peak structures.

In FIG. 8B, the two signals are subtracted (P1-P2) from one another, either without any prior filtering or before the artificial neural network has been properly trained. In theory, it is expected that the heterodyne signals will remain, but that the direct signals will substantially cancel each other. As can be seen, however, the direct signals have not been canceled and a significant portion thereof remains. Such a result indicates that the non-ideal behavior and imperfections in the optical heterodyne system have not been corrected for.

FIG. 8C illustrates the process of training the artificial neural network to correct for the non-ideal behavior and imperfections. The graph shown in FIG. 8C represents the error or difference between the two plots (P1-P2) as the artificial neural network is being calibrated. In this example, the artificial neural network is being used to filter the second plot P2. The data used for the calibration is the first 2000 data points for both plots P 1 and P2. The number of iterations is 500, and the convergence speed μ is set at 0.1. These parameters may be specified manually by the user (e.g., via the calibration module), or pre-programmed into the system. The particular artificial neural network used in this example has four input stage nodes, two hidden stage nodes, and one output stage node. As can be seen, the error is large at the beginning of the training process, but begins to decrease about halfway through the process (around 250 iterations), and bottoms out towards the end.

Note that the data used, the first 2000 data points, comes from an area of the signals where the heterodyne component is known to be substantially zero. As such, the resulting error should also be substantially zero. Note also that the data used is data that has already been captured (e.g., by the data acquisition unit). Therefore, it is not necessary to keep the input signals turned on during calibration.

FIG. 8D shows the subtraction of the two plots after plot P2 has been filtered by the artificial neural network (P1-ANN(P2)). As can be seen, the double-peak structure remains, indicating the heterodyne signals are still present, but the flat portion representing the direct signals have been substantially canceled.

As will be recognized by those skilled in the art, the innovative concepts described in the foregoing description can be modified and varied over a wide range of applications. For example, although a fiber based system has been described, the concepts disclosed herein can be practiced equally well without optical fibers using, for example, a beam splitter or other couplers. In addition, multiple artificial neural networks may be used as needed by a particular application. Accordingly, the scope of the subject matter should not be limited to any of the specific exemplary teachings discussed, but is instead defined by the following claims.

**Claims**

1.  A data processing unit (208) for use in an optical heterodyne balanced receiver system (200) to correct for non-ideal behavior and imperfections in said system, the data processing unit comprising:

    a central processing unit (300); and
    a data storage unit (304) connected to said central processing unit, said data storage unit having computer readable instructions (800) stored thereon for causing said central processing unit to:

        implement an artificial neural network (306) in said data processing unit;
        receive data to be corrected into one or more input nodes of said artificial neural network; and
        correct said data for said non-ideal behavior and imperfections using said artificial neural network.

2.  The data processing unit according to claim 1, wherein said computer readable instructions further cause said central processing unit to apply an input node weight to said data for at least one input node (500).

3.  The data processing unit according to claim 2, wherein said computer readable instructions further cause said central processing unit to sum said weighted data from said at least one input node at one or more hidden nodes (502) of said artificial neural network, and apply a hidden node weight to said sum to produce a weighted sum for at least one hidden node.

4.  The data processing unit according to claim 3, wherein said computer readable instructions further cause said central processing unit to sum said weighted sum from said at least one hidden node at one or more output nodes (504) of said artificial neural network to produce corrected data.

5.  The data processing unit according to claim 3 or 4, wherein said computer readable instructions further cause said central processing unit to apply a transfer function to said sum of weighted data from said at least one input node and to said sum of weighted sum from said at least one hidden node.

6.  An optical heterodyne system (200), comprising:

    an optical coupler;
    detectors adapted to detect output signals from said optical coupler;
    an artificial neural network (306) configured to receive data representing one of said detected output signals; and
    a data processing unit (208) configured to subtract an output of said artificial neural network from data representing another one of said detected output signals to isolate an optical heterodyne signal.

7.  The system according to claim 6, wherein said optical heterodyne system is a balanced receiver system.

8.  The system according to claim 6 or 7, wherein said artificial neural network includes at least one input node (500), at least one hidden node (502), and at least one output node (504).

9.  The system according to claim 8, wherein a value of said at least one input node is a normalized version of said data representing one of said detected output signals.

10. The system according to claim 8 or 9, wherein a weight associated with said at least one input node and said at least one hidden node is adjusted by adding a correction factor to a current value of each weight.

FIG. 1

EP 1 396 949 A2

FIG. 2

FIG. 3

FIG. 4

FIG. 6

**FIG. 5**

800

Start

Provide "n" samples from
input stream to input
stage nodes — 801

Apply weights to samples
and provide to hidden
stage nodes — 802

Evaluate hidden stage
nodes — 803

Apply weights to hidden
node values and provide
to output stage node — 804

Evaluate output stage
nodes — 805

Calibration
? — 806
Yes →

No ↓

Done
with input stream
? — 807
Yes → End

No ↓

Increment input stream — 808

End

Reset input stream

814 — Yes

Iterate
calibration
? — 813 No

Increment input stream

812 — No — 811

Done
with input stream
? — Yes

Adjust weights based on
error — 810

Determine Error — 809

**FIG. 7**

FIG. 8A

FIG. 8B

*FIG. 8C*

*FIG. 8D*